# EUROPEAN PATENT APPLICATION

(11) **EP 4 501 566 A1**
(43) Date of publication of application: **05.02.2025**
(21) Application number: 23774644.1
(22) Date of filing: 13.03.2023
(51) Int. Cl.: B28B 1/30, C04B 24/02, C04B 24/16, C04B 28/14, C04B 38/10

(54) **CELL-CONTAINING GYPSUM SLURRY**

(30) Priority: 24.03.2022 JP 2022048602
(71) Applicant: Kao Corporation, Tokyo 103-8210 (JP)
(72) Inventor: TAMAGAWA Ojiro, Wakayama-shi, Wakayama 640-8580 (JP); NAKANO Tatsuya, Wakayama-shi, Wakayama 640-8580 (JP); TANIMOTO Ryu, Wakayama-shi, Wakayama 640-8580 (JP)
(74) Representative: Hoffmann Eitle
(86) International application number: PCT/JP2023/009614
(87) International publication number: WO 2023/182047

(57) **Abstract**

Provided are a bubble-containing gypsum slurry and a method for producing the same, whereby, in bubble-containing gypsum slurries of the same specific gravity, a bubble size in the gypsum slurry can be increased with a small amount of a foaming component.

A bubble-containing gypsum slurry containing, a hydraulic powder containing gypsum, water, the following component (A1), optionally the following component (A2), and the following component (B),
component (A1): an alkyl or alkenyl sulfate or a salt thereof,
component (A2): one or more selected from surfactants other than component (A1), and
component (B): a nonionic compound with a LogP of 0 or more and 3.0 or less,
wherein a mass ratio of a content of component (B) to a total content of components (A1) and (A2), (B)/[(A1) + (A2)], is 0.05 or more and 0.5 or less.

## Description

### Field of the Invention

The present invention relates to a bubble-containing gypsum slurry and a method for producing the same.

### Background of the Invention

A weight reduction of a hydraulic composition containing cement or gypsum as a hardening agent has been achieved by introducing bubbles thereinto. In usual, a foam obtained by foaming a liquid composition containing a foaming agent composition and water is mixed with a hydraulic composition or with fine aggregates or various kinds of admixture materials to produce a lightweight bubble-containing hydraulic composition.

JP-A H7-291761 discloses a foaming agent for producing a lightweight gypsum board obtained by combining 100 parts of an anionic surfactant selected from an alkali metal salt, an ammonium salt and an alkanolammonium salt of a sulfated product of an adduct of ethylene oxide of a higher alcohol having 8 and 10 carbons with 5 to 100 parts of an adduct of 1 to 2 mol of ethylene oxide of an alcohol having 1 to 4 carbons, and discloses that the foaming agent for producing a lightweight gypsum board attains a desired volume with a small use amount, and excellent adhesiveness of base paper to a gypsum core and a high core strength even in the case of a low-density gypsum board. Further, in the Examples, a foaming agent containing 35 mass% of an alkyl ether sulfate and 17 mass% of ethylene glycol monobutyl ether is disclosed.

JP-A 2003-313060 discloses a hydraulic composition foaming agent containing an alkyl ether sulfate having a hydrocarbon group with 8 to 18 carbons and an alcohol with 8 to 18 carbons at a specific weight ratio, and discloses that the hydraulic composition foaming agent can form a stable foam even if mixed with a hydraulic substance and is suitable for producing a lightweight hydraulic composition. Further, in the Examples, a foaming agent containing sodium lauryl ether sulfate and octyl alcohol at a mass ratio of 75/25 is disclosed.

JP-A 2018-535909 discloses a gypsum board comprising a set gypsum core disposed between two cover sheets, the set gypsum core comprising a gypsum crystal matrix formed from at least water, stucco and a foam, wherein the foam is formed from a foaming agent comprising at least one alkyl sulfate, at least one alkyl ether sulfate or any combination thereof and a fatty alcohol. Further, this literature discloses that a gypsum board of an example contained 30 weight% of a surfactant and 1 weight% of a fatty alcohol, the form of an alkyl ether sulfate and an alkyl sulfate at a ratio of 40:60, and that 1% of 1-octanol was used as a fatty alcohol.

### Summary of the Invention

While a weight reduction of a bubble-containing hydraulic composition containing cement or gypsum as a hardening agent, especially a bubble-containing gypsum slurry can be achieved by reducing a specific gravity by containing bubbles therein, the weight reduction results in reduced strength. As disclosed in paragraph [0004] of JP-A H10-330174, one possible method for suppressing the strength reduction is to increase a bubble size in the bubble-containing hydraulic composition, but there were limitations of the ability to increase the bubble size. Therefore, a technology for attaining both weight reduction and strength of a bubble-containing hydraulic composition, especially a bubble-containing gypsum slurry by establishing a technology of increasing a bubble size therein under the same specific gravity is demanded. Further, from the viewpoints of a reduction in agent costs, a reduction in environmental impacts at the time of transportation and ease of reproduction (a reduction in carryover agents in reproduction gypsum), there is a need for a small addition amount of a foaming agent composition, a source of a foam, to a bubble-containing hydraulic composition, especially a bubble-containing gypsum slurry.

The present invention provides a bubble-containing gypsum slurry and a method for producing the same, whereby, in bubble-containing gypsum slurries of the same specific gravity, a bubble size in the gypsum slurry can be increased with a small amount of a foaming component.

The present invention relates to a bubble-containing gypsum slurry containing, a hydraulic powder containing gypsum, water, the following component (A1), optionally the following component (A2), and the following component (B),
component (A1): an alkyl or alkenyl sulfate or a salt thereof,
component (A2): one or more selected from surfactants other than component (A1), and
component (B): a nonionic compound with a LogP of 0 or more and 3.0 or less,
wherein a mass ratio of a content of component (B) to a total content of components (A1) and (A2), (B)/[(A1) + (A2)], is 0.05 or more and 0.5 or less.

Further, the present invention relates to a method for producing a bubble-containing gypsum slurry including the following steps 1 and 2,
<step 1>
   a step of foaming a liquid composition containing a foaming agent composition for hydraulic compositions and water to obtain a foam, the liquid composition containing the above component (A1), optionally the above component (A2), the above component (B) and water, wherein a mass ratio of a content of component (B) to a total content of components (A1) and (A2), (B)/[(A1) + (A2)], is 0.05 or more and 0.5 or less, and
<step 2>
   a step of mixing the foam obtained in step 1 with a gypsum slurry containing a hydraulic powder containing gypsum and water to obtain the bubble-containing gypsum slurry.

Further, the present invention relates to a hardened product of a bubble-containing gypsum slurry formed by hardening the bubble-containing gypsum slurry of the present invention, wherein an average bubble size is 200 um or more and 800 um or less.

Further, the present invention relates to use as a foaming agent for gypsum slurry of a foaming agent composition for hydraulic compositions containing the above component (A1), optionally the above component (A2), the above component (B) and water, wherein a mass ratio of a content of component (B) to a total content of components (A1) and (A2), (B)/[(A1) + (A2)], is 0.05 or more and 0.5 or less.

According to the present invention, provided are a bubble-containing gypsum slurry and a method for producing the same, whereby, in bubble-containing gypsum slurries of the same specific gravity, a bubble size in the gypsum slurry can be increased with a small amount of a foaming component.

The present invention can increase, in bubble-containing gypsum slurries of the same specific gravity, a bubble size in the gypsum slurry with a small amount of a foaming component, and can enhance strength of the gypsum slurry after hardening.

### Embodiments of the Invention

The foaming agent composition for hydraulic compositions of the present invention can increase, in bubble-containing hydraulic compositions, especially gypsum slurries, of the same specific gravity, a bubble size in a hydraulic composition, especially in a gypsum slurry with a small addition amount. Further, the bubble-containing gypsum slurry of the present invention can increase, in bubble-containing gypsum slurries of the same specific gravity, a bubble size in the gypsum slurry with a small amount of a foaming component (in other words, with a small addition amount of a foaming agent composition for hydraulic compositions). The reason for this is not wholly certain, but is inferred to be as follows.

Conventionally, as disclosed, for example, in JP-A 2004-529050, a bubble size or the like in a hydraulic composition, especially in a gypsum slurry has been controlled by adjusting, while focusing attention on a surfactant, foam properties in an aqueous system when a liquid composition containing a foaming agent composition for hydraulic compositions and water is foamed.

However, in order to achieve an increased bubble size in a hydraulic composition, especially in a gypsum slurry by the method of controlling only foam properties in the aqueous system while focusing attention on a surfactant, a necessary addition amount of a foaming agent composition to introduce a certain amount of bubbles in the hydraulic composition, especially in the gypsum slurry is more likely to increase as it requires promotion of coalescence of bubbles in the hydraulic composition, especially in the gypsum slurry and involves degradation in foam properties in the aqueous system. Further, if foam properties are improved such that bubble breakage does not occur in the hydraulic composition, especially in the gypsum slurry to reduce the necessary addition amount of the foaming agent composition, bubbles in the hydraulic composition, especially in the gypsum slurry become minute. In other words, the present inventors found that there was a difficult problem for attaining both a reduced addition amount of a foaming agent composition and an increased bubble size in a hydraulic composition, especially in a gypsum slurry.

The present inventors then found that the above problem can be solved by controlling a critical micelle concentration of a foaming agent composition and a foam coalescence rate in a hydraulic composition, especially in a gypsum slurry.

More specifically, the above problem is solved by combining, as a foaming component, an alkyl or alkenyl sulfate or a salt thereof as component (A1) and a nonionic compound with a LogP of 0 or more and 3.0 or less as component (B).

A specific anionic surfactant, component (A1) of the present invention, is known to have a higher critical micelle concentration than a nonionic surfactant owing to the action of intermolecular electrostatic repulsion. Further, it is known that a combined use of a higher alcohol with an anionic surfactant reduces a critical micelle concentration as the higher alcohol mitigates electrostatic repulsion between molecules of the anionic surfactant at the time of micelle formation.

In other words, the foaming agent composition for hydraulic compositions of the present invention can achieve a reduced addition amount of the foaming agent composition for hydraulic compositions necessary to foam by using a specific anionic surfactant, component (A1) in combination with a nonionic compound with a LogP of 0 or more and 3.0 or less, component (B), wherein in water, component (B) is incorporated into a micelle formed of component (A1) to stabilize bubbles and concurrently reduce the critical micelle concentration. Here, component (B) is used in an amount falling within the range that it can be incorporated into the micelle of surfactants containing component (A1). On the other hand, in a hydraulic composition, especially in a gypsum slurry, component (A1) loses its surfactant ability due to ions dissolved from a hydraulic powder, and thus, hydrophobic component (B) turns into an agent for promoting coalescence of bubbles, thereby achieving an increased bubble size in the hydraulic composition, especially in the gypsum slurry. It is inferred that these actions can achieve both a reduced addition amount of the foaming agent composition for hydraulic compositions and an increased bubble size in a hydraulic composition, especially in a gypsum slurry.

Note that the present invention is not limited to the above expression mechanism.

### [Foaming agent composition for hydraulic compositions]

### <Component (A1)>

The foaming agent composition for hydraulic compositions of the present invention contains an alkyl or alkenyl sulfate or a salt thereof as component (A1).

Component (A1) has an alkyl group or an alkenyl group and preferably an alkyl group with preferably 8 or more and more preferably 10 or more, and preferably 18 or less, more preferably 16 or less, further preferably 14 or less and furthermore preferably 12 or less carbons from the viewpoint of reducing an addition amount to a hydraulic composition.

Examples of the salt of component (A1) include one or more selected from an alkali metal salt such as a sodium salt, a potassium salt or the like, an ammonium salt and an organic ammonium salt.

Specific examples of component (A1) include one or more selected from octyl sulfate, decyl sulfate, dodecyl sulfate, tetradecyl sulfate, hexadecyl sulfate, octadecyl sulfate, 2-ethylhexyl sulfate, 2-propylheptyl sulfate and salts of these, and from the viewpoint of reducing an addition amount to a hydraulic composition, component (A1) preferably contains one or more compounds selected from decyl sulfate, dodecyl sulfate, tetradecyl sulfate and salts of these and more preferably contains one or more compounds selected from decyl sulfate, dodecyl sulfate and salts of these.

Component (A1) preferably contains an alkyl or alkenyl sulfate or a salt thereof having an alkyl group or an alkenyl group with 10 carbons from the viewpoint of increasing a bubble size in a hydraulic composition.

A content of an alkyl or alkenyl sulfate or a salt thereof having an alkyl group or an alkenyl group with 10 carbons in component (A1) is preferably 50 mass% or more, more preferably 60 mass% or more, further preferably 70 mass% or more and further preferably 80 mass% or more, and 100 mass% or less from the viewpoint of increasing a bubble size in a hydraulic composition.

Component (A1) preferably contains (A11) an alkyl or alkenyl sulfate or a salt thereof having an alkyl group or an alkenyl group with 6 or more and 10 or less carbons (hereinafter referred to as component (A11)), and (A12) an alkyl or alkenyl sulfate or a salt thereof having an alkyl group or an alkenyl group with 11 or more and 22 or less carbons (hereinafter referred to as component (A12)) from the viewpoint of reducing an addition amount to a hydraulic composition.

A mass ratio of a content of component (A11) to a content of component (A12) in component (A1), (A11)/(A12), is preferably 0.8 or more, more preferably 1.0 or more and further preferably 1.3 or more, and preferably 200 or less, more preferably 50 or less, further preferably 10 or less and further preferably 3.0 or less from the viewpoints of increasing a bubble size in a hydraulic composition and reducing an addition amount to a hydraulic composition.

### <Component (A2)>

The foaming agent composition for hydraulic compositions of the present invention may optionally contain one or more selected from surfactants other than component (A1) as component (A2).

Examples of component (A2) include one or more selected from an anionic surfactant other than component (A1), a nonionic surfactant, a cationic surfactant and an amphoteric surfactant. Component (A2) preferably contains an anionic surfactant other than component (A1) from the viewpoint of reducing an addition amount to a hydraulic composition.

Examples of the anionic surfactant other than component (A1) include a sulfonic acid compound, an ether sulfate compound, a carboxylic acid compound, a phosphonic acid compound, a phosphoric acid compound or the like having a hydrocarbon group with 8 or more and 18 or less carbons, and include, for example, one or more selected from an alkyl or alkenyl sulfonic acid having an alkyl group or an alkenyl group, an olefin sulfonic acid, a polyoxyalkylene alkyl or alkenyl ether sulfate having an alkyl group or an alkenyl group, a polyoxyalkylene alkyl or alkenyl ether carboxylic acid having an alkyl group or an alkenyl group and salts of these.

Examples of the salts of these anionic surfactants include one or more selected from an alkali metal salt such as a sodium salt, a potassium salt or the like, an ammonium salt and an organic ammonium salt.

Examples of the nonionic surfactant include an alkylene oxide compound, a polyhydric alcohol compound or the like having a hydrocarbon group with 8 or more and 18 or less carbons, and include, for example, one or more selected from an alkyl monoglyceryl ether, a polyoxyalkylene monoalkyl or alkenyl ether, an alkyl glycoside or an alkyl polyglycoside (a glycoside-type nonionic surfactant), a sorbitan-based nonionic surfactant, an aliphatic alkanol amide, a fatty acid monoglyceride and a sucrose fatty acid ester.

Examples of the cationic surfactant include an ammonium compound, an imidazoline compound, a pyridine compound or the like having a hydrocarbon group with 8 or more and 18 or less carbons, and include, for example, one or more selected from an alkyl trimethyl ammonium salt, a dialkyl dimethyl ammonium salt, an alkyl ammonium salt, a benzalkonium salt, a benzethonium salt, an imidazolinium salt and a pyridinium salt. Examples of the salts include halogen salts.

Examples of the amphoteric surfactant include an amine oxide compound, a carbobetaine compound, an amidobetaine compound, an imidazolinium betaine or the like having a hydrocarbon group with 8 or more and 18 or less carbons, and include, for example, one or more selected from an alkyl dimethyl amine oxide, an alkyl dimethyl amino acetic acid betaine, an alkyl hydroxy sulfobetaine, an alkyl amidopropyl betaine and an alkyl carboxymethyl hydroxyethyl imidazolinium betaine.

The foaming agent composition for hydraulic compositions of the present invention may contain one or more selected from a polyoxyalkylene alkyl or alkenyl ether sulfate and a salt thereof having an alkyl group or an alkenyl group with 8 or more and 16 or less carbons (hereinafter referred to as component (A21)) as component (A2) from the viewpoint of reducing an addition amount to a hydraulic composition. When the composition contains component (A21) as component (A2), a content of component (A21) in component (A2) is preferably 80 mass% or more and more preferably 90 mass% or more, and preferably 100 mass% or less.

Component (A21) has an alkyl group or an alkenyl group and preferably an alkyl group with preferably 8 or more and more preferably 10 or more, and preferably 16 or less, more preferably 14 or less and further preferably 12 or less carbons from the viewpoint of reducing an addition amount to a hydraulic composition.

The oxyalkylene group of component (A21) is an oxyethylene group or an oxypropylene group and preferably an oxyethylene group, and an average number of added moles of the oxyalkylene group is preferably 1 or more and more preferably 2 or more from the viewpoint of solubility in water, and preferably 10 or less, more preferably 6 or less and further preferably 4 or less from the viewpoint of reducing an addition amount to a hydraulic composition.

Examples of the salt of component (A21) include one or more selected from an alkali metal salt such as a sodium salt, a potassium salt or the like, an ammonium salt and an organic ammonium salt.

Specific examples of component (A21) include one or more selected from polyoxyethylene octyl ether sulfate, polyoxyethylene decyl ether sulfate, polyoxyethylene lauryl ether sulfate, polyoxyethylene tridecyl ether sulfate, polyoxyethylene myristyl ether sulfate, polyoxyethylene cetyl ether sulfate, polyoxyethylene stearyl ether sulfate, polyoxypropylene octyl ether sulfate, polyoxypropylene decyl ether sulfate, polyoxypropylene lauryl ether sulfate, polyoxypropylene tridecyl ether sulfate, polyoxypropylene myristyl ether sulfate, polyoxypropylene cetyl ether sulfate, polyoxypropylene stearyl ether sulfate, polyoxyethylene polyoxypropylene octyl ether sulfate, polyoxyethylene polyoxypropylene decyl ether sulfate, polyoxyethylene polyoxypropylene lauryl ether sulfate, polyoxyethylene polyoxypropylene tridecyl ether sulfate, polyoxyethylene polyoxypropylene myristyl ether sulfate, polyoxyethylene polyoxypropylene cetyl ether sulfate, polyoxyethylene polyoxypropylene stearyl ether sulfate and salts of these, and from the viewpoint of frothing performance, one or more selected from polyoxyethylene decyl ether sulfate, polyoxyethylene lauryl ether sulfate, polyoxyethylene myristyl ether sulfate, polyoxypropylene decyl ether sulfate, polyoxypropylene lauryl ether sulfate, polyoxypropylene myristyl ether sulfate, polyoxyethylene polyoxypropylene decyl ether sulfate, polyoxyethylene polyoxypropylene lauryl ether sulfate, polyoxyethylene polyoxypropylene myristyl ether sulfate and salts of these are preferable.

### <Component (B)>

The foaming agent composition for hydraulic compositions of the present invention contains a nonionic compound with a LogP of 0 or more and 3.0 or less as component (B). When component (B) has a hydrocarbon group, the hydrocarbon group preferably has 7 or less carbons.

The LogP of component (B) is 0 or more, preferably 0.4 or more, more preferably 0.8 or more and further preferably 1.0 or more from the viewpoints of increasing an average bubble size in a hydraulic composition and reducing an addition amount to a hydraulic composition, and 3.0 or less, preferably 2.5 or less, more preferably 2.0 or less and further preferably 1.8 or less from the viewpoint of liquid phase stability of the foaming agent composition.

In the present invention, a logP value is a coefficient indicating affinities of an organic compound for water and 1-octanol. The 1-octanol/water partition coefficient P is, in distribution equilibrium when a trace amount of a compound is dissolved as a solute in the two liquid phase solvents 1-octanol and water, a ratio between equilibrium concentrations of the compound in the respective solvents, and generally expressed in the form of the logarithm logP thereof to base 10. Log P values of many compounds have been reported, and a database available from Daylight Chemical Information Systems, Inc. (Daylight CIS) or the like, in which many values are listed, can be referred to. If there is no measured log P value, it can be calculated by the program "ClogP" available from Daylight CIS or the like. This program outputs a value of "calculated logP (ClogP)" calculated by the Hansch, Leo fragment approach together with a measured logP value if any.

The fragment approach is based on a chemical structure of a compound, and takes an atomic number and a chemical bond type into consideration (cf. A. Leo, Comprehensive Medicinal Chemistry, Vol. 4, C. Hansch, P. G. Sammens, J. B. Taylor and C. A. Ramsden, Eds., p. 295, Pergamon Press, 1990). This ClogP value can be used instead of a measured logP value at the selection of a compound. In the present invention, a measured value of logP is used if any, or if there is none, a ClogP value calculated by the program CLOGP v 4.01 is used.

Examples of the nonionic compound of component (B) include one or more selected from an alcohol, a glycol ether and an aldehyde. However, these nonionic compounds need to have a logP falling within the above range.

The alcohol is preferably a monohydric alcohol, and examples include one or more selected from 1-propanol (logP: 0.25), 2-propanol (LogP: 0.05), 1-butanol (logP: 0.88), 2-butanol (LogP: 0.61), 2-methyl-1-propanol (LogP: 0.76), 2-methyl-2-propanol (LogP: 0.35), 1-pentanol (LogP: 1.51), 2-pentanol (LogP: 1.19), 3-pentanol (LogP: 1.21), 2-methyl-1-butanol (logP: 1.29), 2-methyl-2-butanol (LogP: 0.89), 3-methyl-2-butanol (LogP: 1.28), 3-methyl-1-butanol (LogP: 1.16), cyclopentanol (LogP: 0.71), benzyl alcohol (logP: 1.1), 2-hexanol (LogP: 1.76), 3-hexanol (LogP: 1.65), 2-methyl-1-pentanol (LogP: 1.75), 3-methyl-1-pentanol (LogP: 1.75), 4-methyl-1-pentanol (LogP: 1.75), 2-methyl-2-pentanol (LogP: 1.57), 3-methyl-2-pentanol (LogP: 1.57), 4-methyl-2-pentanol (LogP: 1.57), 2-methyl-3-pentanol (LogP: 1.57), 3-methyl-3-pentanol (LogP: 1.57), 2,2-dimethyl-1-butanol (LogP: 1.57), 2-ethyl-1-butanol (LogP: 1.75), cyclohexanol (logP: 1.23), 1-heptanol (LogP: 2.62), 1-hexanol (logP: 2.03), 2-ethyl-1-hexanol (logP: 2.73), 6-methyl-1-heptanol (LogP: 2.73) and octanol (logP: 3).

The glycol ether is preferably a glycol ether having a hydrocarbon group with 7 or less carbons, and examples include one or more selected from diethylene glycol monobutyl ether (logP: 0.56), ethylene glycol monobutyl ether (logP: 0.81), ethylene glycol monophenyl ether (logP: 1.16), triethylene glycol monobutyl ether (logP: 0.02) and propylene glycol monobutyl ether (logP: 1.15) .

Examples of the aldehyde include one or more selected from butanal (logP: 0.88), pentanal (logP: 1.31), hexanal (logP: 1.78), pentanal (logP: 2.29), benzaldehyde (logP: 1.48) and cinnamaldehyde (logP: 1.9).

Examples of component (B) other than an alcohol, a glycol ether and an aldehyde include one or more selected from butyl lactate (logP: 0.8), dimethyl ether (logP: 0.1), diethyl ether (logP: 0.89), diisopropyl ether (logP: 1.52), butyl ethyl ether (logP: 2.03), anisole (logP: 2.11), tetrahydrofuran (logP: 0.46), propanoic acid (logP: 0.33), butanoic acid (logP: 0.79), pentanoic acid (logP: 1.39), hexanoic acid (logP: 1.92), heptanoic acid (logP: 2.42) and benzoic acid (logP: 1.87).

Component (B) is preferably one or more selected from hexanol and octanol from the viewpoint of increasing a bubble size in a hydraulic composition, and is preferably one or more selected from 1-butanol, benzyl alcohol, benzaldehyde, diethylene glycol monobutyl ether and cyclohexanol and more preferably one or more selected from 1-butanol, benzyl alcohol and benzaldehyde from the viewpoint of liquid phase stability of the foaming agent composition for hydraulic compositions.

### <Composition and others>

The foaming agent composition for hydraulic compositions of the present invention contains component (A1) in an amount of preferably 5 mass% or more, more preferably 10 mass% or more, further preferably 15 mass% or more and furthermore preferably 20 mass% or more from the viewpoint of reducing an addition amount to a hydraulic composition, and preferably 60 mass% or less, more preferably 50 mass% or less, further preferably 40 mass% or less and furthermore preferably 30 mass% or less from the viewpoint of liquid phase stability of the foaming agent composition for hydraulic compositions.

In the present invention, a mass of component (A1) is specified using a value expressed in terms of a sodium salt.

When the foaming agent composition for hydraulic compositions of the present invention contains component (A2), the composition contains component (A2) in an amount of preferably 1 mass% or more, more preferably 2 mass% or more and further preferably 3 mass% or more from the viewpoint of reducing an addition amount to a hydraulic composition, and preferably 10 mass% or less, more preferably 7 mass% or less and further preferably 4 mass% or less from the viewpoint of increasing a bubble size in a hydraulic composition.

In the present invention, a mass of an anionic surfactant contained in component (A2) is specified using a value expressed in terms of a sodium salt. Further, a mass of a cationic surfactant contained in component (A2) is specified using a value expressed in terms of a chloride salt.

The foaming agent composition for hydraulic compositions of the present invention contains component (B) in an amount of preferably 1 mass% or more, more preferably 3 mass% or more and further preferably 5 mass% or more from the viewpoint of reducing an addition amount to a hydraulic composition, and preferably 30 mass% or less, more preferably 20 mass% or less and further preferably 10 mass% or less from the viewpoint of reducing costs for the foaming agent composition for hydraulic compositions.

When the foaming agent composition for hydraulic compositions of the present invention contains component (A2), a mass ratio of a content of component (A1) to a total content of components (A1) and (A2), (A1)/[(A1) + (A2)], is preferably 0.5 or more, more preferably 0.6 or more and more preferably 0.8 or more from the viewpoint of increasing a bubble size in a hydraulic composition, and 1 or less and preferably 1 from the viewpoint of reducing an addition amount to a hydraulic composition.

In the foaming agent composition for hydraulic compositions of the present invention, a mass ratio of a content of component (B) to a total content of components (A1) and (A2), (B)/[(A1) + (A2)], is 0.05 or more, preferably 0.1 or more and more preferably 0.2 or more from the viewpoint of reducing an addition amount to a hydraulic composition, and 0.5 or less, preferably 0.4 or less, more preferably 0.35 or less and further preferably 0.3 or less from the viewpoint of reducing costs for the foaming agent composition for hydraulic compositions.

In the foaming agent composition for hydraulic compositions of the present invention, a mass ratio of a content of component (B) to a content of component (A1), (B)/(A1), is preferably 0.05 or more, more preferably 0.1 or more and further preferably 0.2 or more from the viewpoint of reducing an addition amount to a hydraulic composition, and preferably 0.5 or less, more preferably 0.4 or less, further preferably 0.35 or less and furthermore preferably 0.3 or less from the viewpoint of reducing costs for the foaming agent composition for hydraulic compositions.

When the foaming agent composition for hydraulic compositions of the present invention contains component (A21), the composition contains component (A21) in an amount of preferably 1 mass% or more, more preferably 2 mass% or more, further preferably 5 mass% or more and furthermore preferably 10 mass% or more from the viewpoint of reducing an addition amount to a hydraulic composition, and preferably 10 mass% or less, more preferably 5 mass% or less and further preferably 2 mass% or less from the viewpoint of increasing a bubble size in a hydraulic composition.

In the present invention, a mass of component (A21) is specified using a value expressed in terms of a sodium salt.

When the foaming agent composition for hydraulic compositions of the present invention contains component (A21), a mass ratio of a content of component (A1) to a total content of components (A1) and (A21), (A1)/[(A1) + (A21)], is preferably 0.5 or more, more preferably 0.6 or more and more preferably 0.8 or more from the viewpoint of increasing a bubble size in a hydraulic composition, and preferably 1 or less and more preferably 0.9 or less from the viewpoint of reducing an addition amount to a hydraulic composition.

When the foaming agent composition for hydraulic compositions of the present invention contains component (A21), a mass ratio of a content of component (B) to a total content of components (A1) and (A21), (B)/[(A1) + (A21)], is preferably 0.05 or more, more preferably 0.1 or more and further preferably 0.2 or more from the viewpoint of reducing an addition amount to a hydraulic composition, and preferably 0.5 or less, more preferably 0.4 or less, further preferably 0.35 or less and furthermore preferably 0.3 or less from the viewpoint of reducing costs for the foaming agent composition for hydraulic compositions.

The foaming agent composition for hydraulic compositions of the present invention contains water. The foaming agent composition for hydraulic compositions of the present invention contains water in an amount of preferably 10 mass% or more, more preferably 20 mass% or more, further preferably 30 mass% or more and furthermore preferably 45 mass% or more, and preferably 90 mass% or less, more preferably 80 mass% or less and further preferably 70 mass% or less.

The foaming agent composition for hydraulic compositions of the present invention can contain a thickener, a chelating agent, a heavy metal scavenger, a rust inhibitor, a preservative, a colorant, a fragrance, an anti-foaming agent, a dispersant, a flocculant, a water-soluble polymer or the like as another component. Those which do not qualify as components (A1), (A2) and (B) are used for them.

The foaming agent composition for hydraulic compositions of the present invention is obtained by mixing component (A1), optionally component (A2), component (B) and another component. During mixing, heating may be appropriately carried out to reduce a solution viscosity.

Examples of uses covered by the foaming agent composition for hydraulic compositions of the present invention include gypsum slurry, lightweight milk (aerated milk, air milk), lightweight mortar (aerated mortar, air mortar), lightweight concrete (aerated concrete, air concrete), backfilling fillers, filling-in fillers, concrete blocks for construction, ALC (autoclaved lightweight aerated concrete), grouting materials, porous ceramic materials, brick, fire-resistant materials, lightweight embankments, mortar for pumping and other hydraulic compositions that can contain bubbles. It is expected that these hydraulic compositions that can contain bubbles are provided with functions such as weight reduction, strength improvement, fluidity improvement, heat insulation, heat resistance, viscosity addition and fluidity control by mixing with bubbles using the foaming agent composition for hydraulic compositions of the present invention as a foaming agent.

Among these hydraulic compositions that can contain bubbles, the foaming agent composition for hydraulic compositions of the present invention is suitable for use in gypsum slurry.

In other words, the present invention provides use as a foaming agent for gypsum slurry of the foaming agent composition for hydraulic compositions of the present invention.

The aspects stated in the foaming agent composition for hydraulic compositions of the present invention can be appropriately applied to the use as a foaming agent for gypsum slurry of the present invention.

### [Bubble-containing hydraulic composition and method for producing the same]

As a method for producing a bubble-containing hydraulic composition of the present invention, a method including, frothing the foaming agent composition for hydraulic compositions of the present invention, and combining the composition as a foam with a hydraulic substance to reduce weight is preferable in view of entrainment of uniform bubbles. The foaming agent composition for hydraulic compositions of the present invention or a mixed liquid obtained by diluting the composition with water may be directly kneaded into paste, slurry, mortar or concrete containing cement or gypsum as a hydraulic substance. A method for adding the foaming agent composition for hydraulic compositions of the present invention to a hydraulic composition is not limited, and a method for obtaining a foam from the foaming agent composition for hydraulic compositions of the present invention or the mixed liquid obtained by diluting the composition with water is not limited, either.

The present invention provides a bubble-containing hydraulic composition containing, a hydraulic powder, water, the above component (A1), optionally the above component (A2), and the above component (B), wherein a mass ratio of a content of component (B) to a total content of components (A1) and (A2), (B)/[(A1) + (A2)], is 0.05 or more and 0.5 or less.

The matters stated in the foaming agent composition for hydraulic compositions of the present invention can be appropriately applied to the bubble-containing hydraulic composition of the present invention.

Components (A1), (A2) and (B) are the same as in the aspects stated in the foaming agent composition for hydraulic compositions of the present invention.

The hydraulic powder is a powder having the physical property of hardening through a hydration reaction, is exemplified by cement, gypsum or the like, and is preferably gypsum.

The hydraulic powder preferably contains gypsum. A content of gypsum in the hydraulic powder is preferably 80 mass% or more and more preferably 90 mass% or more, and preferably 100 mass% or less and more preferably 100 mass%.

A content of a clinker ground product in the hydraulic powder is preferably 20 mass% or less, more preferably 10 mass% or less and further preferably 5 mass% or less from the viewpoint of reducing an addition amount of a foaming component. The hydraulic powder is preferably free of a clinker ground product.

Examples of the cement include ordinary Portland cement, belite cement, moderate heat cement, high early strength cement, ultra high early strength cement, sulfate resistant cement or the like, and may include blast furnace slag cement, fly ash cement, silica fume cement or the like obtained by adding blast furnace slag, fly ash, silica fume, stone powder (calcium carbonate powder) or the like to these cements.

The bubble-containing hydraulic composition of the present invention has a water/hydraulic powder ratio of preferably 20 mass% or more, more preferably 30 mass% or more and further preferably 40 mass% or more from the viewpoint of fluidity of slurry, and preferably 100 mass% or less, more preferably 90 mass% or less and further preferably 80 mass% or less from the viewpoint of strength of a hardened product.

Here, the water/hydraulic powder ratio is a mass percentage (mass%) of water to the hydraulic powder in the hydraulic composition, and is calculated by water/hydraulic powder × 100. The water/hydraulic powder ratio is calculated on the basis of an amount of a powder having the physical property of hardening through a hydration reaction. When the powder having the physical property of hardening through a hydration reaction contains a high strength admixture material, an amount of the high strength admixture material is also included in the amount of the hydraulic powder. The same applies to other quantitative relations in the hydraulic composition in connection with the hydraulic powder.

The bubble-containing hydraulic composition of the present invention contains component (A1) in an amount relative to 100 parts by mass of the hydraulic powder of preferably 0.001 parts by mass or more, more preferably 0.005 parts by mass or more and further preferably 0.01 parts by mass or more from the viewpoint of reducing a specific gravity of a hardened product of the bubble-containing hydraulic composition, and preferably 0.1 parts by mass or less, more preferably 0.06 parts by mass or less and further preferably 0.03 parts by mass or less from the viewpoint of strength of a hardened product of the bubble-containing hydraulic composition.

When the bubble-containing hydraulic composition of the present invention contains component (A2), the composition contains component (A2) in an amount relative to 100 parts by mass of the hydraulic powder of preferably 0.0001 parts by mass or more, more preferably 0.0005 parts by mass or more and further preferably 0.001 parts by mass or more from the viewpoint of reducing a specific gravity of a hardened product of the bubble-containing hydraulic composition, and preferably 0.01 parts by mass or less, more preferably 0.006 parts by mass or less and further preferably 0.001 parts by mass or less from the viewpoint of increasing a bubble size in a hardened product of the bubble-containing hydraulic composition.

The bubble-containing hydraulic composition of the present invention contains component (B) in an amount relative to 100 parts by mass of the hydraulic powder of preferably 0.00025 parts by mass or more, more preferably 0.00125 parts by mass or more and further preferably 0.0025 parts by mass or more from the viewpoint of reducing an addition amount of a foaming component, and preferably 0.025 parts by mass or less, more preferably 0.015 parts by mass or less and further preferably 0.0075 parts by mass or less from the viewpoint of cost reduction.

In the bubble-containing hydraulic composition of the present invention, a mass ratio of a content of component (A1) to a total content of components (A1) and (A2), (A1)/[(A1) + (A2)], is preferably 0.5 or more, more preferably 0.6 or more and more preferably 0.8 or more from the viewpoint of increasing a bubble size in the hydraulic composition, and preferably 1 or less and more preferably 1 from the viewpoint of reducing an addition amount of a foaming component.

In the bubble-containing hydraulic composition of the present invention, a mass ratio of a content of component (B) to a total content of components (A1) and (A2), (B)/[(A1) + (A2)], is 0.05 or more, preferably 0.1 or more and more preferably 0.2 or more from the viewpoint of reducing an addition amount of a foaming component, and 0.5 or less, preferably 0.4 or less, more preferably 0.35 or less and further preferably 0.3 or less from the viewpoint of cost reduction.

In the bubble-containing hydraulic composition of the present invention, a mass ratio of a content of component (B) to a content of component (A1), (B)/(A1), is preferably 0.05 or more, more preferably 0.1 or more and further preferably 0.2 or more from the viewpoint of reducing an addition amount of a foaming component, and preferably 0.5 or less, more preferably 0.4 or less, further preferably 0.35 or less and furthermore preferably 0.3 or less from the viewpoint of cost reduction.

When the bubble-containing hydraulic composition of the present invention contains component (A21) as component (A2), the composition contains component (A21) in an amount relative to 100 parts by mass of the hydraulic powder of preferably 0.0001 parts by mass or more, more preferably 0.0005 parts by mass or more and further preferably 0.001 parts by mass or more from the viewpoint of reducing a specific gravity of a hardened product of the bubble-containing hydraulic composition, and preferably 0.01 parts by mass or less, more preferably 0.006 parts by mass or less and further preferably 0.001 parts by mass or less from the viewpoint of increasing a bubble size in a hardened product of the bubble-containing hydraulic composition.

When the bubble-containing hydraulic composition of the present invention contains component (A21) as component (A2), a mass ratio of a content of component (A1) to a total content of components (A1) and (A21), (A1)/[(A1) + (A21)], is preferably 0.5 or more, more preferably 0.6 or more and more preferably 0.8 or more from the viewpoint of increasing a bubble size in a hardened product of the bubble-containing hydraulic composition, and preferably 1 or less and more preferably 0.9 or less from the viewpoint of cost reduction.

When the bubble-containing hydraulic composition of the present invention contains component (A21) as component (A2), a mass ratio of a content of component (B) to a total content of components (A1) and (A21), (B)/[(A1) + (A21)], is preferably 0.05 or more, more preferably 0.1 or more and further preferably 0.2 or more from the viewpoint of reducing an addition amount of a foaming component, and preferably 0.5 or less, more preferably 0.4 or less, further preferably 0.35 or less and furthermore preferably 0.3 or less from the viewpoint of cost reduction.

The bubble-containing hydraulic composition of the present invention can contain a fine aggregate and/or a coarse aggregate. Further, the bubble-containing hydraulic composition of the present invention can contain an admixture agent or an admixture material publicly known in this industry.

A specific gravity of a hardened product of the bubble-containing hydraulic composition of the present invention is preferably 0.3 or more, more preferably 0.4 or more and further preferably 0.5 or more from the viewpoint of strength of the hardened product of the bubble-containing hydraulic composition, and preferably 0.9 or less, more preferably 0.8 or less and further preferably 0.7 or less from the viewpoint of handleability of the hardened product of the bubble-containing hydraulic composition.

The bubble-containing hydraulic composition of the present invention contains bubbles. An average bubble size of the hardened product of the bubble-containing hydraulic composition of the present invention is preferably 200 um or more, more preferably 300 um or more and further preferably 350 um or more from the viewpoint of improving strength of the hardened product, and preferably 800 um or less, more preferably 700 um or less, further preferably 650 um or less, furthermore preferably 600 um or less and furthermore preferably 550 um or less from the viewpoint of aesthetic cross-sectional appearance.

The average bubble size is calculated from an average (arithmetic mean) of values of diameters of 100 bubble cross sections arbitrarily measured by observing, with a digital microscope, a cross section produced by preparing the hardened product of the bubble-containing hydraulic composition and arbitrarily cutting the hardened product. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section.

The bubble-containing hydraulic composition of the present invention can be produced using the foaming agent composition for hydraulic compositions of the present invention.

In other words, the present invention provides a method for producing a bubble-containing hydraulic composition including the following steps 1 and 2,
<step 1>
   a step of foaming a liquid composition containing the foaming agent composition for hydraulic compositions of the present invention and water to obtain a foam, and
<step 2>
   a step of mixing the foam obtained in step 1 with a hydraulic composition containing a hydraulic powder and water to obtain the bubble-containing hydraulic composition.

The bubble-containing hydraulic composition of the present invention can be prepared by this producing method.

The aspects stated in the foaming agent composition for hydraulic compositions of the present invention and the bubble-containing hydraulic composition of the present invention can be appropriately applied to the method for producing a bubble-containing hydraulic composition of the present invention.

In the method for producing a bubble-containing hydraulic composition of the present invention, the content of each component and the mass ratios between them stated in the bubble-containing hydraulic composition of the present invention can be appropriately applied by reading the content of each component as a mixing amount.

In step 1, an expansion ratio of the liquid composition depends on uses of the hydraulic composition or the like, but is preferably 3 times or more, more preferably 5 times or more and further preferably 7 times or more from the viewpoint of economic efficiency, and preferably 20 times or less, more preferably 15 times or less and further preferably 10 times or less from the viewpoint of kneading performance.

In step 2, a mixing amount of the foam relative to the hydraulic composition depends on uses of the hydraulic composition or the like, but is preferably 50 volume% or more, more preferably 75 volume% or more and further preferably 100 volume% or more from the viewpoint of a weight reduction of a hardened product, and preferably 200 volume% or less, more preferably 150 volume% or less and further preferably 100 volume% or less from the viewpoint of strength of a hardened product. In this producing method, an admixture agent or an admixture material publicly known in this industry can be mixed in step 1 and/or step 2.

After step 2, the following step 3 is further performed to produce a hardened product of the bubble-containing hydraulic composition,
step 3: a step of molding and hardening the bubble-containing hydraulic composition after step 2.

### [Bubble-containing gypsum slurry and method for producing the same]

In the bubble-containing hydraulic composition of the present invention, the hydraulic powder preferably contains gypsum. In the present invention, a bubble-containing hydraulic composition containing a hydraulic powder containing gypsum is referred to as a bubble-containing gypsum slurry.

A content of gypsum in the hydraulic powder is preferably 80 mass% or more and more preferably 90 mass% or more, and preferably 100 mass% or less and more preferably 100 mass%.

A content of a clinker ground product in the hydraulic powder is preferably 20 mass% or less, more preferably 10 mass% or less and further preferably 5 mass% or less from the viewpoint of reducing an addition amount of a foaming component. The hydraulic powder is preferably free of a clinker ground product.

In other words, the present invention provides a bubble-containing gypsum slurry containing, a hydraulic powder containing gypsum, water, the above component (A1), optionally the above component (A2), and the above component (B), wherein a mass ratio of a content of component (B) to a total content of components (A1) and (A2), (B)/[(A1) + (A2)], is 0.05 or more and 0.5 or less.

The bubble-containing gypsum slurry of the present invention is suitable for use in gypsum boards.

The matters stated in the foaming agent composition for hydraulic compositions of the present invention, the bubble-containing hydraulic composition of the present invention and the method for producing a bubble-containing hydraulic composition of the present invention can be appropriately applied to the bubble-containing gypsum slurry of the present invention.

Components (A1), (A2) and (B) are the same as in the aspects stated in the foaming agent composition for hydraulic compositions of the present invention.

In the bubble-containing gypsum slurry of the present invention, a content of each component and mass ratios between them fall within the same range as the content of each component and the mass ratios between them in the bubble-containing hydraulic composition of the present invention.

As the gypsum, any gypsum such as high-quality neutralized gypsum, phosphogypsum, a byproduct of phosphoric acid, flue gas desulfurization gypsum generated by thermal power generation, natural gypsum containing various impurities or clays, a mixture of them or the like can be used.

Clay contained in gypsum is composed mainly of hydrous silicate minerals with a layered structure (hereinafter referred to as clay minerals), and examples of clay minerals contained as fine-grained minerals in this clay include kaolin minerals (kaolinite, dickite and nacrite), serpentine (lizardite, antigorite and chrysotile), mica clay minerals (illite, sericite, glauconite and celadonite), chlorite, vermiculite and smectite (montmorillonite, beidellite, nontronite, saponite and hectorite).

Gypsum includes anhydrous gypsum, hemihydrate gypsum, dihydrate gypsum or the like. As a raw material gypsum, natural gypsum or chemical gypsum such as neutralized gypsum or by-product gypsum or the like can be used alone or a mixture of two or more of them can be used. Examples of major chemical gypsum include phosphogypsum, fluorogypsum, titanium gypsum or flue gas desulfurization gypsum or the like. Further, raw material gypsums may also include recycled gypsum. Recycled gypsum may be any recycled gypsum recovered from waste gypsum boards generated in-house by gypsum board manufacturers or waste gypsum boards generated during new construction and during demolition or the like. The present invention can be suitably used for any raw material gypsum of these, and also has excellent effects on those which are obtained by blending them at various proportions.

The bubble-containing gypsum slurry of the present invention can contain an additive for use in gypsum boards or the like. Such an additive includes a general-purpose water reducing agent, anti-foaming agent, foam control agent, hardening control agent, water repellent, adhesive, retarder or the like, and production of a gypsum board is also performed by further adding glass fiber, carbon fiber, used paper, virgin pulp or the like as reinforcing fiber or together with a lightweight aggregate such as perlite, styrene foam or the like.

A specific gravity of a hardened product of the bubble-containing gypsum slurry of the present invention is preferably 0.3 or more, more preferably 0.4 or more and further preferably 0.5 or more from the viewpoint of strength of the hardened product of the bubble-containing gypsum slurry, and preferably 0.9 or less, more preferably 0.8 or less and further preferably 0.7 or less from the viewpoint of handleability of the hardened product of the bubble-containing gypsum slurry.

The bubble-containing gypsum slurry of the present invention contains bubbles. An average bubble size of the hardened product of the bubble-containing gypsum slurry of the present invention is preferably 200 um or more, more preferably 300 um or more and further preferably 350 um or more from the viewpoint of improving strength of the hardened product, and preferably 800 um or less, more preferably 700 um or less, further preferably 650 um or less, furthermore preferably 600 um or less and furthermore preferably 550 um or less from the viewpoint of aesthetic cross-sectional appearance.

In other words, the present invention provides a hardened product of a bubble-containing gypsum slurry formed by hardening the bubble-containing gypsum slurry of the present invention, wherein an average bubble size is preferably 200 um or more, more preferably 300 um or more and further preferably 350 um or more from the viewpoint of improving strength of the hardened product, and preferably 800 um or less, more preferably 700 um or less, further preferably 650 um or less, furthermore preferably 600 um or less and furthermore preferably 550 um or less from the viewpoint of aesthetic cross-sectional appearance.

The average bubble size is calculated from an average (arithmetic mean) of values of diameters of 100 bubble cross sections arbitrarily measured by observing, with a digital microscope, a cross section produced by preparing the hardened product of the bubble-containing hydraulic composition and arbitrarily cutting the hardened product. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section.

The present invention provides a method for producing a bubble-containing gypsum slurry including the following steps 1 and 2,
<step 1>
   a step of foaming a liquid composition containing a foaming agent composition for hydraulic compositions and water to obtain a foam, the liquid composition containing the above component (A1), optionally the above component (A2), the above component (B) and water, wherein a mass ratio of a content of component (B) to a total content of components (A1) and (A2), (B)/[(A1) + (A2)], is 0.05 or more and 0.5 or less,
<step 2>
   a step of mixing the foam obtained in step 1 with a gypsum slurry containing a hydraulic powder containing gypsum and water to obtain the bubble-containing gypsum slurry.

The bubble-containing gypsum slurry of the present invention can be prepared by this producing method.

In step 1, the foaming agent composition for hydraulic compositions can be produced using the foaming agent composition for hydraulic compositions of the present invention, and is the same as in the aspects stated in the foaming agent composition for hydraulic compositions of the present invention.

The aspects stated in the foaming agent composition for hydraulic compositions of the present invention, the bubble-containing hydraulic composition and the method for producing the same of the present invention, and the bubble-containing gypsum slurry of the present invention can be appropriately applied to the method for producing a bubble-containing gypsum slurry of the present invention.

In the method for producing a bubble-containing hydraulic composition of the present invention, the content of each component and the mass ratios between them stated in the bubble-containing hydraulic composition of the present invention can be appropriately applied by reading the content of each component as a mixing amount. Temperatures of the foam and the gypsum slurry used for mixing are each preferably 15°C or more and 40°C or less.

Steps 1 and 2 can be performed in conformity with the method for producing a bubble-containing hydraulic composition of the present invention.

After step 2, the following step 3 is further performed to produce a gypsum board,
step 3: a step of molding and hardening the bubble-containing gypsum slurry after step 2.

The gypsum slurry can be molded or hardened by a publicly-known method. For example, the gypsum board can be prepared by referring to "Production of gypsum board" on pages 322 to 324 of "Gypsum and Lime Handbook" (edited by Institute of Gypsum and Lime Research).

### Examples

The components used in the examples and comparative examples are shown below.

### Component (A1)

- C10AS: sodium decyl sulfate
- C10-16AS: a sodium alkyl sulfate having an alkyl group with 10 to 16 carbons [mass ratio: C10/C12/C14/C16 = 62.2/24.0/8.9/4.9, (C6-C10)/(C11-C22) = 1.6]

### Component (A2)

- AES: sodium polyoxyethylene alkyl ether sulfate, product name "EMAL D-3-D" manufactured by Kao Corporation, component (A21)

### Component (B)

- BDG: diethylene glycol monobutyl ether, LogP: 0.56, manufactured by Tokyo Chemical Industry Co., Ltd.
- 1-BuOH: 1-butanol, LogP: 0.88, manufactured by FUJIFILM Wako Pure Chemical Corporation
- BnOH: benzyl alcohol, LogP: 1.1, manufactured by FUJIFILM Wako Pure Chemical Corporation
- Cyclohexanol: cyclohexanol, LogP: 1.23, manufactured by FUJIFILM Wako Pure Chemical Corporation
- Benzaldehyde: benzaldehyde, LogP: 1.48, manufactured by FUJIFILM Wako Pure Chemical Corporation
- C6OH: hexanol, LogP: 2.03, manufactured by FUJIFILM Wako Pure Chemical Corporation
- C8OH: octanol, LogP: 3.0, product name "KALCOL 0898" manufactured by Kao Corporation

### Component (B') (comparative component for component (B))

- EtOH: ethanol, LogP: -0.31, manufactured by FUJIFILM Wako Pure Chemical Corporation
- Cyclohexane: cyclohexane, LogP: 3.44, manufactured by FUJIFILM Wako Pure Chemical Corporation

### (1) Preparation of foaming agent composition for hydraulic compositions

Each foaming agent composition for hydraulic compositions shown in Table 1 was prepared by the following method. Raw materials were added to a 50 mL screw cap tube at predetermined proportions such that a total was 30 g, and stirred with a stirrer at 1000 rpm for 3 hours. When a solution viscosity was high and stirring efficiency was low, heating at 40°C was appropriately carried out.

### (2) Evaluation of liquid phase stability

A condition of appearance of each foaming agent composition for hydraulic compositions after 30 minutes passed from preparation was evaluated on the basis of the following criteria. The results are shown in Table 1.

Uniform and transparent: phase separation does not occur, and turbidity is not observed at all.

Whitish: phase separation does not occur, but turbidity is observed.

Separated: phase separation occurs.

Highly viscous and whitish: highly viscous, and turbidity is observed.

### (2) Preparation of gypsum slurry

The prepared foaming agent composition for hydraulic compositions in Table 1 and water were mixed at an arbitrary proportion to prepare a dilute aqueous solution of the foaming agent composition for hydraulic compositions. 25 g of the prepared aqueous solution was added into a 1 L disposable cup, and stirred with a flat 6 paddle blade (FP-50, manufactured by AS ONE Corporation) at 2000 rpm (EUROSTAR 200 control, manufactured by IKA Japan K.K.) for 60 seconds to obtain a foam. Note that a concentration of the dilute aqueous solution of the foaming agent composition for hydraulic compositions was appropriately adjusted such that a specific gravity of a dried hardened product of a bubble-containing gypsum slurry to be finally obtained was about 0.65. A concentration of the foaming agent composition for hydraulic compositions in the dilute aqueous solution at that time is shown as "(2) necessary addition amount" in Table 1.

200 g of calcined gypsum, 2 g of dihydrate gypsum, 150 g of water and 0.8 g of a water reducing agent (MIGHTY 150, manufactured by Kao Corporation) were added to a 500 mL disposable cup, and stirred for 20 seconds using a hand mixer (MK-H4, manufactured by Panasonic Corporation) with its knob set to 3 to prepare a gypsum slurry before adding to the foam.

The whole amount of the prepared gypsum slurry was added to 25 g of the foam prepared in the 1 L disposable cup, and they were kneaded for 30 seconds at 1500 rpm with the flat 6 paddle blade in the 1 L disposable cup to obtain the bubble-containing gypsum slurry. Note that a water/gypsum ratio of the gypsum slurry was 75 mass%. Temperatures of the foam and the gypsum slurry used for kneading were both 20°C.

### (3) Measurement of average bubble size in gypsum

The obtained bubble-containing gypsum slurry was poured into a mold for cylindrical specimens with a diameter of 5 cm and a height of 10 cm (PLAMOLD, manufactured by Nifco Inc.), and left to stand for 1 hour or more at a room temperature.

The hardened gypsum slurry was demolded from the mold for cylindrical specimens, dried by leaving it to stand in a thermostatic chamber at 60°C for 24 hours, and then cut at a portion at a height of 5 cm to prepare a cross section of the hardened product. Diameters of 100 bubble cross sections were arbitrarily measured by observing the cross section with a digital microscope, and an average bubble size was calculated from an arithmetic mean of those values. Note that the measurements of the diameters of the bubble cross sections employ, as the diameters, a diameter in the case of a circular bubble cross section, a major axis in the case of an oval bubble cross section, and the longest portion in the case of an irregularly-shaped bubble cross section. The results of "(1) average bubble size in gypsum" are shown in Table 1.

Further, the obtained hardened product of each gypsum slurry had a specific gravity of about 0.65.

Further, a ratio of (1) average bubble size in gypsum to (2) necessary addition amount of foaming agent composition for hydraulic compositions, (1)/(2), is shown in Table 1. (1) average bubble size in gypsum and (2) necessary addition amount of foaming agent composition for hydraulic compositions are in a trade-off relation, wherein more (2) necessary addition amount of foaming agent composition for hydraulic compositions is required to increase (1) average bubble size in gypsum, and it is uneconomical. The average bubble size in gypsum in the Examples herein is only a result when a test was conducted under the conditions specified herein, and easily changes if production conditions are changed. However, a relation that (1)/(2) of the present invention is larger than in a conventional product is the same regardless of the production conditions. In other words, the bubble size described in the Examples herein is not so important, but the fact that (1)/(2) is large is rather important. For example, while (1) average bubble size in gypsum is small in example 1 compared to comparative example 4, the average bubble sizes in gypsum change if the production conditions are changed, and when the average bubble sizes in gypsum are made to be the same, example 1 in which (1)/(2) is larger than in comparative example 4 only requires a small necessary addition amount of foaming agent composition for hydraulic compositions. Therefore, a value of (1)/(2) is an important indicator for achieving a desired average bubble size in gypsum with an economically excellent low addition amount.

Note that evaluations (2) and (3) were not performed on the foaming agent compositions for hydraulic compositions of comparative examples 2 and 4 in which liquid phase separation occurred and uniform sampling was difficult.

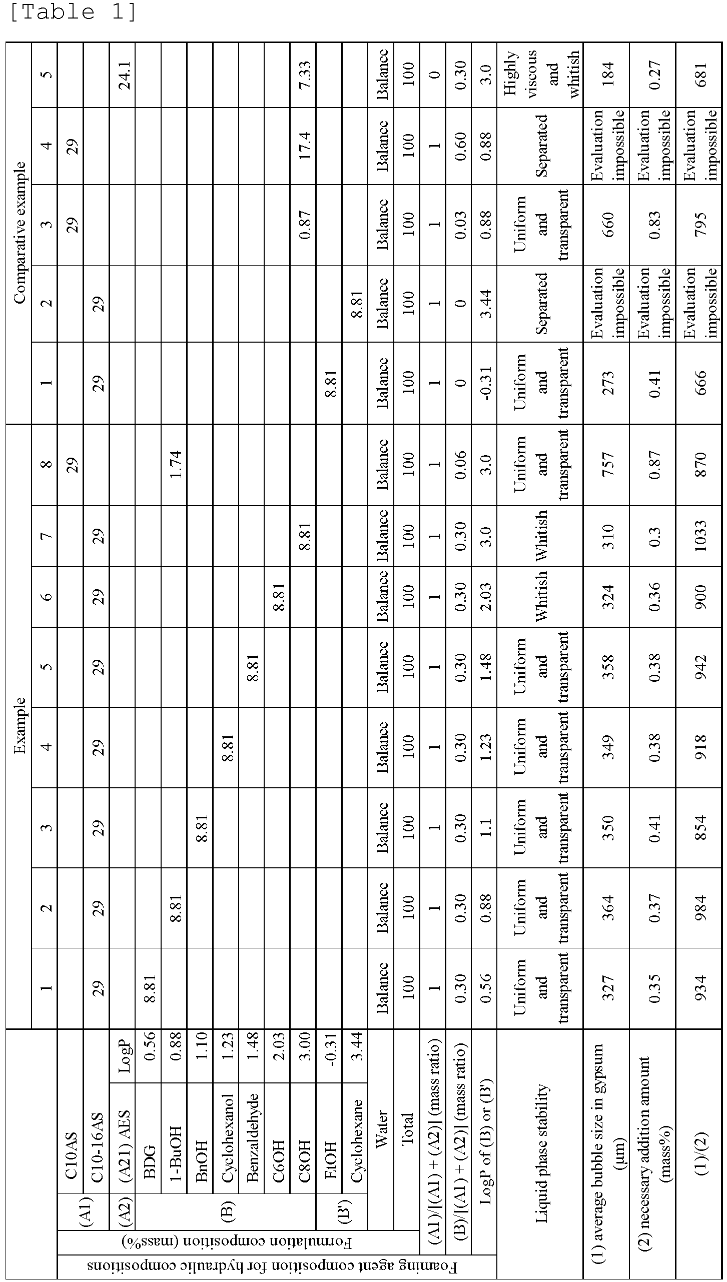

The scores of (1)/(2), a total evaluation of (1) average bubble size in gypsum and (2) necessary addition amount, were higher in examples 1 to 7 than in comparative examples 1, 3 and 5.

In detail, it is understood that (1) average bubble size in gypsum is large in examples 1 to 7 compared to comparative examples 1 and 5 while the values of (2) necessary addition amount of foaming agent composition for hydraulic compositions for obtaining bubble-containing gypsum slurries of the same specific gravity are approximately the same in both. It is further considered that strength of a hardened product is enhanced by increasing a bubble size in gypsum. Further, it is understood that the values of (2) necessary addition amount of foaming agent for obtaining bubble-containing gypsum slurries of the same specific gravity in examples 1 to 7 are about half that of comparative example 3.

## Claims

1. A bubble-containing gypsum slurry comprising, a hydraulic powder containing gypsum, water, the following component (A1), optionally the following component (A2), and the following component (B),
component (A1): an alkyl or alkenyl sulfate or a salt thereof,
component (A2): one or more selected from surfactants other than the component (A1), and
component (B): a nonionic compound with a LogP of 0 or more and 3.0 or less,
wherein a mass ratio of a content of the component (B) to a total content of the components (A1) and (A2), (B)/[(A1) + (A2)], is 0.05 or more and 0.5 or less.

2. The bubble-containing gypsum slurry according to claim 1, wherein a content of gypsum in the hydraulic powder is 80 mass% or more.

3. The bubble-containing gypsum slurry according to claim 1 or 2, wherein the component (A1) comprises an alkyl or alkenyl sulfate or a salt thereof having an alkyl group or an alkenyl group with 6 or more and 10 or less carbons, and an alkyl or alkenyl sulfate or a salt thereof having an alkyl group or an alkenyl group with 11 or more and 22 or less carbons.

4. The bubble-containing gypsum slurry according to any one of claims 1 to 3, wherein a mass ratio of a content of the component (A1) to a total content of the components (A1) and (A2), (A1)/[(A1) + (A2)], is 0.6 or more and 1 or less.

5. The bubble-containing gypsum slurry according to any one of claims 1 to 4, wherein a content of an alkyl or alkenyl sulfate or a salt thereof having an alkyl group or an alkenyl group with 10 carbons in the component (A1) is 60 mass% or more.

6. The bubble-containing gypsum slurry according to any one of claims 1 to 5, wherein the nonionic compound of the component (B) is one or more selected from an alcohol, a glycol ether and an aldehyde.

7. The bubble-containing gypsum slurry according to any one of claims 1 to 6, wherein the hydraulic powder is free of a clinker ground product.

8. The bubble-containing gypsum slurry according to any one of claims 1 to 7, wherein an average bubble size of a hardened product of the bubble-containing gypsum slurry is 300 um or more and 800 um or less.

9. A method for producing a bubble-containing gypsum slurry comprising the following steps 1 and 2,
<step 1>
a step of foaming a liquid composition containing a foaming agent composition for hydraulic compositions and water to obtain a foam, the liquid composition containing the following component (A1), optionally the following component (A2), the following component (B) and water,
component (A1): an alkyl or alkenyl sulfate or a salt thereof,
component (A2): one or more selected from surfactants other than the component (A1), and
component (B): a nonionic compound with a LogP of 0 or more and 3.0 or less,
wherein a mass ratio of a content of the component (B) to a total content of the components (A1) and (A2), (B)/[(A1) + (A2)], is 0.05 or more and 0.5 or less, and
<step 2>
a step of mixing the foam obtained in the step 1 with a gypsum slurry containing a hydraulic powder containing gypsum and water to obtain the bubble-containing gypsum slurry.

10. The method for producing a bubble-containing gypsum slurry according to claim 9, wherein a content of gypsum in the hydraulic powder is 80 mass% or more.

11. The method for producing a bubble-containing gypsum slurry according to claim 9 or 10, wherein the component (A1) comprises an alkyl or alkenyl sulfate or a salt thereof having an alkyl group or an alkenyl group with 6 or more and 10 or less carbons, and an alkyl or alkenyl sulfate or a salt thereof having an alkyl group or an alkenyl group with 11 or more and 22 or less carbons.

12. A method for producing a gypsum board, wherein the method comprises the method for producing a bubble-containing gypsum slurry according to any one of claims 9 to 11, and further comprises the following step 3,
<step 3>
a step of molding and hardening the bubble-containing gypsum slurry after the step 2.

13. A hardened product of a bubble-containing gypsum slurry formed by hardening the bubble-containing gypsum slurry according to any one of claims 1 to 8, wherein an average bubble size is 200 um or more and 800 um or less.

14. Use as a foaming agent for gypsum slurry of a foaming agent composition for hydraulic compositions comprising the following component (A1), optionally the following component (A2), the following component (B) and water,
component (A1): an alkyl or alkenyl sulfate or a salt thereof,
component (A2): one or more selected from surfactants other than the component (A1), and
component (B): a nonionic compound with a LogP of 0 or more and 3.0 or less,
wherein a mass ratio of a content of the component (B) to a total content of the components (A1) and (A2), (B)/[(A1) + (A2)], is 0.05 or more and 0.5 or less.
